# EUROPEAN PATENT SPECIFICATION

(11) **EP 4 714 681 B1**
(45) Date of publication and mention of the grant of the patent: **11.11.2026**
(21) Application number: 24202004.8
(22) Date of filing: 23.09.2024
(51) Int. Cl.: B60C 11/12

(54) **A TREAD BLOCK ARRANGEMENT HAVING A SIPE, AND A LAMELLA PLATE**
LAUFFLÄCHENBLOCKANORDNUNG MIT EINER LAMELLE UND LAMELLENPLATTE
AGENCEMENT DE BLOC DE BANDE DE ROULEMENT AYANT UNE LAMELLE ET UNE PLAQUE DE LAMELLE

(43) Date of publication of application: 25.03.2026
(73) Proprietor: Nokian Renkaat Oyj, 37101 Nokia (FI)
(72) Inventor: Tikka, Jorma, 37101 Nokia (FI); Jokinen, Mikko, 37101 Nokia (FI); Korkama, Tomi, 37101 Nokia (FI)
(74) Representative: Berggren Oy

(56) References cited:
- JP-A- 2003 211 922
- JP-B2- 4 620 276
- US-A1- 2018 201 071
- US-A1- 2023 139 566

## Description

### Technical field

The present invention relates to a tyre or a tread band having tread blocks, and being provided in the tread blocks with sipes, more particularly to an improved sipe structure or sipe arrangement of a tread block. The present invention also relates to lamella plates that are used in the manufacturing process of a pneumatic tyre for making said sipe structure or sipe arrangement.

### Background

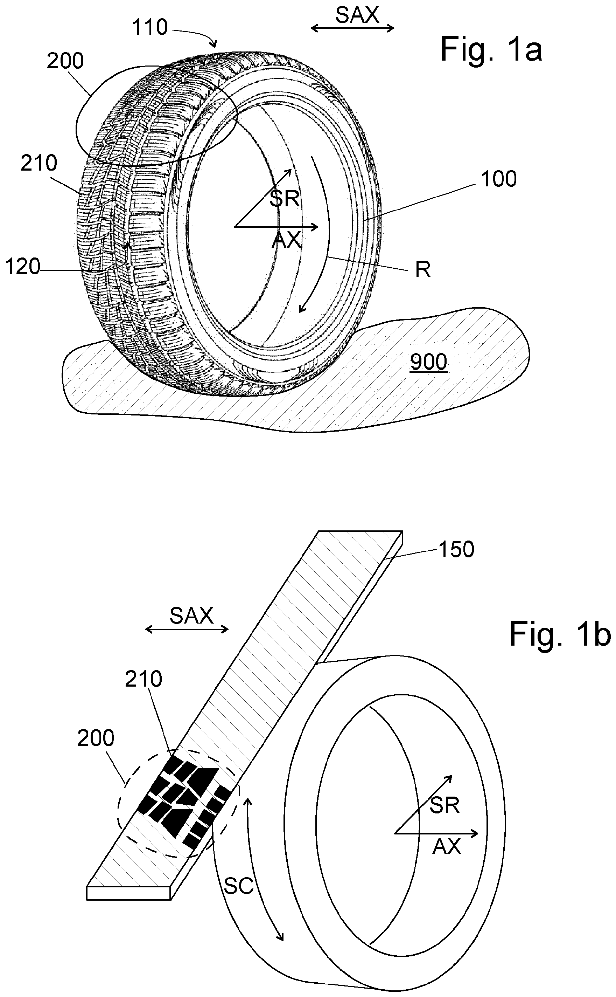

A pneumatic tyre 100 is indicated in Fig. 1a. The pneumatic tyre 100 is known to include a tread 110 which has circumferential and transversal grooves 120 on its outer surface, said grooves 120 defining a number of protruding parts, such as ribs and tread blocks 210. The tread 110 is meant for a rolling contact against a ground surface 900, such as road. The grooves 120 are meant for draining water and/or slush that is possibly located on the ground surface away from the tread, so that the contact between the tread 110 and the ground surface 900 is as good and consistent as possible. A tread 110 of the tyre 100 can be formed by applying a tread band 150 onto a body of a tyre as depicted in Fig. 1b.

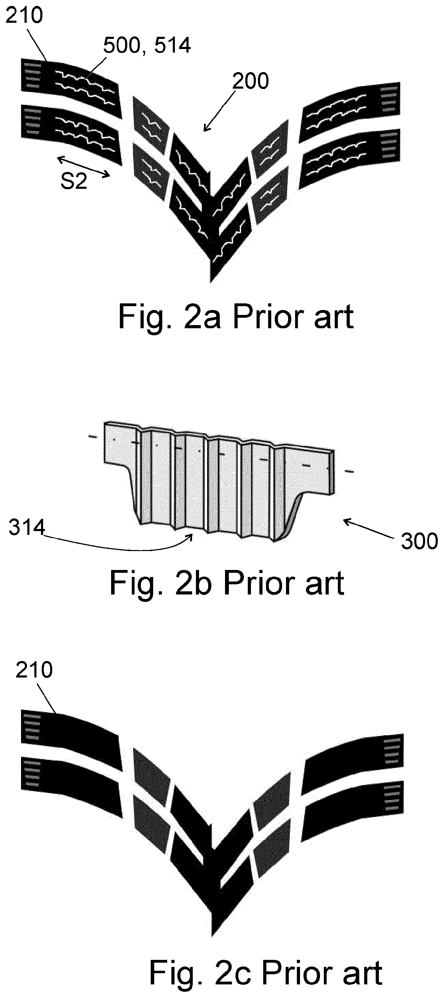

Referring to Fig. 2a, certain types of tyres such as winter tyres and all season tyres are provided in the tread with a number of sipes 500 at various angles with respect to a motion direction of the tyre. The sipes 500 serve a better tyre-ground contact by providing more gripping edges, and particularly in rain by trapping water or on snow by trapping slush/snow, thereby improving traction, braking and lateral stability. The sipes 500 also make the rubber material to deform more easily, in effect making the tyre appear softer. This also improves friction. Sipes improve traction and braking of worn tyres, particularly of tyres that are near the end of their service life because of wearing. Sipes 500 are formed during manufacturing a tyre 100, e.g. by inserting a lamella plate 300, such as one of Fig. 2b, to a green tyre, and after curing the tyre, removing the lamella plate 300 from the tyre 100.

A known lamella plate 300 may have a constant thickness as shown in Fig. 2b. Moreover, a bottom edge 314 of a known lamella plate 300 may be configured to form a sipe having a substantially even bottom, as readable from Fig. 2b. Thus, when the tyre wears by an amount corresponding to a depth of the sipes 500, no sipes are left in the tread, as shown in Fig. 2c.

Also other sipes are known. The document US 2018/0201071 discloses a tyre having a tread, wherein a middle land portion is provided with a plurality of middle lateral grooves including a plurality of first middle lateral grooves, the middle lateral grooves dividing the middle land portion into a plurality of middle blocks. The document US 2023/0139566 discloses a tire having a main groove extending in a circumferential direction, a lug groove extending in a width direction, a land portion defined by the main groove and the lug groove, and a sipe that is a narrow groove that is formed in the land portion, extends in the width direction, and includes an end opening to the main groove. The document JP 4620276 also discloses a tyre having a tread with grooves and sipes. Finally, the document JP 2003211922 discloses a tyre having a plurality of circumferential main grooves extending in a tire circumferential direction and a plurality of ribs positioned between the circumferential main grooves. The tyre has circumferential sipes for preventing the shoulder piece separation.

The inventors have found that having such sipes worsen the handling and traction of a worn tyre. Namely, as the tyre wears, the sipes becomes shallower, which may prevent proper function of the sipes even if the sipes are not totally worn out. Naturally, when the tyre has worn by such an amount that no sipes are left (as in Fig. 2c), the properties of the tread are not affected by sipes since there are not any.

The inventors have considered to deepen the sipes. However, it was realized that deepening the whole sipes effectively softens the tread material too much thereby reducing the handling and traction properties of the tyre.

In line with these findings there is a need to improve handling and traction properties of a worn tyre.

### Summary

The inventors have found that if the bottom of the sipe is provided with indentations, even if the main part of the sipe wears out, the indentations still remain in the tread thereby improving the tyre performance even if the tyre has worn. Moreover, because of forming indentations to the bottom of the sipe instead of deepening the whole sipe, the tyre performance of an unworn or partially worn tyre is also good. Furthermore, particularly grip on wet surface can be improved by providing the sipe with a widening portion so that the widening portion can receive water and/or slush from a wet road thereby improving the grip between other parts of the tread and the road. The invention in disclosed in more specific terms in the independent claims 1 and 9. Dependent claims disclose preferable embodiment. The description and figures explain these and other embodiments.

### Brief description of the drawings

- Fig. 1a: shows a tyre in a perspective view,
- Fig. 1b: shows application of a tread band onto a body of a tyre,
- Fig. 2a: shows sipes of a unworn known tyre,
- Fig. 2b: shows a known lamella plate,
- Fig. 2c: shows a worn known tyre, wherein the tread has worn so much that no sipes are present,
- Fig. 3a: shows an embodiment of a sipe in a side view,
- Fig. 3b: shows a cross section of embodiment of a sipe,
- Fig. 3c: shows a cross section of embodiment of a sipe,
- Fig. 4a: shows an embodiment of a lamella plate in perspective view, the lamella plate being for the purpose of producing a sipe of the kind shown in Figs. 3a to 3c,
- Fig. 4b: shows a cross section of the lamella plate of Fig. 4a,
- Fig. 4c: shows a cross section of the lamella plate of Fig. 4a,
- Fig. 4d: shows a side view of the lamella plate of Fig. 4a,
- Fig. 5: shows an embodiment of a lamella plate in perspective view,
- Fig. 6: shows a worn tyre according to an embodiment, wherein the tread has worn so much that only recessions of sipes are present,
- Fig. 7a: shows in its upper part a top view of sipes and in its lower part a side view of one of the sipes,
- Fig. 7b: shows in its upper part a top view of sipes and in its lower part a side view of one of the sipes,
- Fig. 7c: shows in its upper part a top view of sipes and in its lower part a side view of one of the sipes,
- Fig. 8a: shows a cross section of an embodiment of a sipe,
- Fig. 8b: shows a cross section of an embodiment of a sipe,
- Fig. 8c: shows an embodiment of a sipe in a side view,
- Figs. 9a to 9c: show patterns of sipes manufactured by the lamella plate of Fig. 10a,
- Fig. 10a: shows an embodiment of a lamella plate in a perspective view,
- Fig. 10b: shows a cross section of an embodiment of a lamella plate, and
- Fig. 11: shows a lamella plate, not according to the claimed invention, in perspective view.

### Detailed description

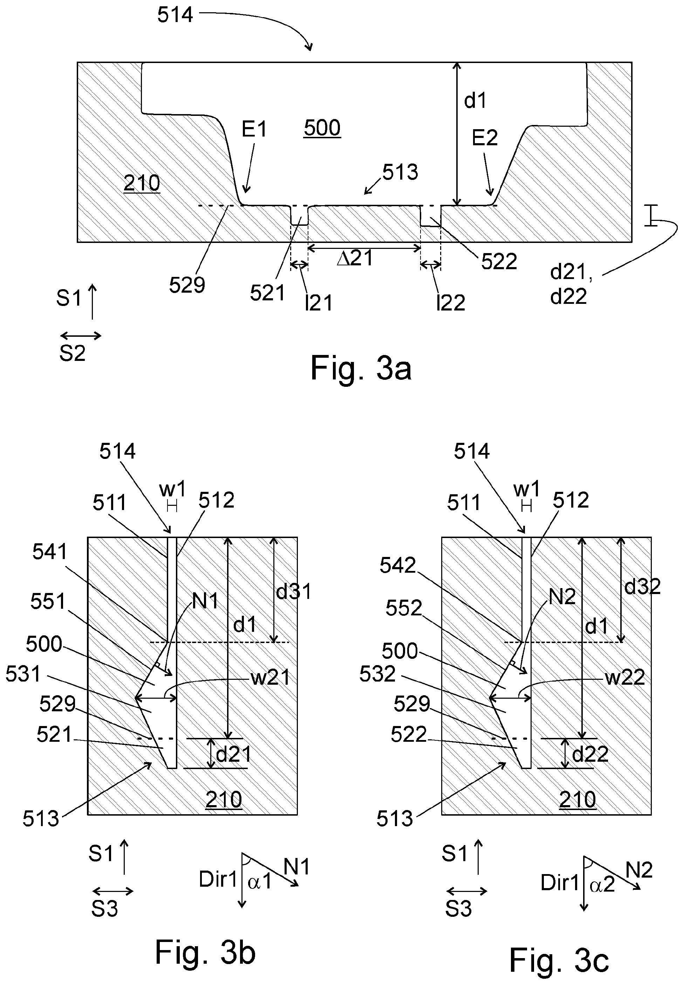

In this description at least the following terms are used:
A sipe refers to a narrow groove provided in a tread block of a tyre. A primary width w1 of a sipe may be e.g. 0.2 mm to 1 mm, such as 0.2 mm to 0.7 mm. An example of the primary width w1 is shown in Fig. 3b.

A lamella plate refers to a plate that is usable for forming a sipe in a moulding process. Thus, when a lamella plate is embedded to uncured rubber, and removed therefrom after curing the rubber, the shape of the sipe formed by the lamella plate is geometrically congruent with the lamella plate. The rubber from which the lamella plate is removed may be rubber material of a tyre or rubber material of a tread band.

A lamella refers to a part of rubber arranged in between two adjacent sipes.

Referring to Fig. 1a, as is well known, a tyre 100 comprises a tread 110. The tread is formed of multiple tread blocks 210, which in combination form a tread block arrangement 200. Referring to Fig. 2a, each tread block 210 may comprise a number of sipes 500. Even if Figs 1a and 2a are showing prior art, these terms and principles apply to the present invention, too. The present invention concerns a shape of a sipe 500, and a lamella plate for forming such a sipe. Fig. 3a and figures subsequent thereto explain embodiments.

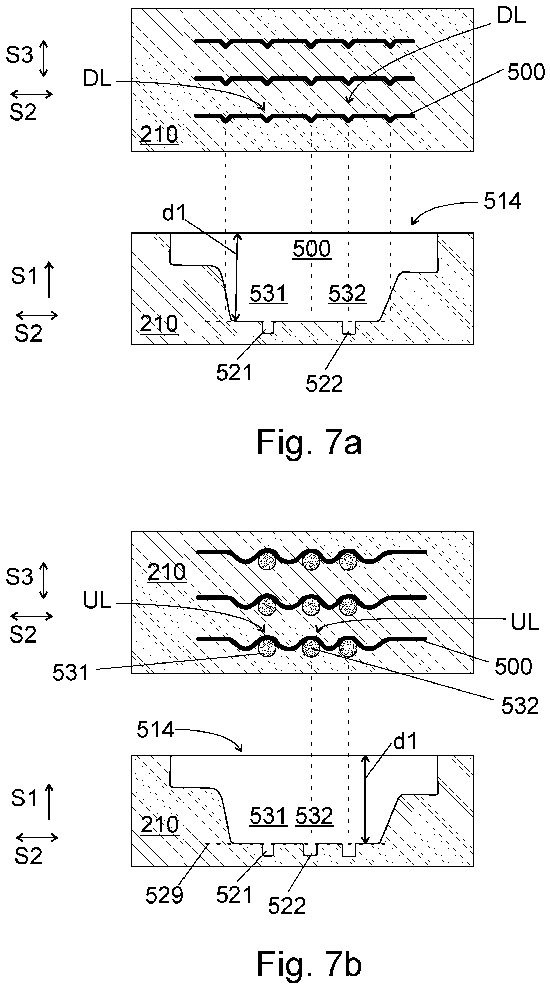

Referring to Fig. 3a, a sipe 500, which is delimited by the tread block 210, has a top opening 514, which is visible on the tread. Namely, the part of the sipe 500 shown e.g. in Fig. 2a is just the top opening 514 of the sipe 500. The shape of the sipe 500 beneath the tread surface is generally not visible to naked eye. Further examples of top openings 514, as seen from top, are shown in Figs. 7a to 7c.

The bottom 513 of the sipe 500 defines a bottom line 529 of the sipe 500. The bottom line 529 may be substantially straight. However, the bottom 513 of the first sipe 500 is provided with at least a first recess 521 and a second recess 522, which intrude the tread block 210. In Fig. 3a, the direction S1 is a direction of depth of the sipe 500 and this direction S1 typically is the radial direction SR of the tyre directed away from the axis of rotation of the tyre (see also Fig. 1a). However, the direction S1 may be tilted relative to SR according to needs. In Fig. 3a, the direction S2 is a direction of length of the sipe 500. This direction S2 typically is more or less aligned with a direction of length of the tread block comprising the sipe, which direction of length typically is not circumferential. Reference is made to Fig. 2a for the direction S2. A direction S3 defines is the direction in which a width of the sipe is measured.

Figs. 3b and 3c show a cross section of the sipe 500 at locations of the first recess 521 and the second recess, respectively. The direction S3 is perpendicular to both the direction S1 and the direction S2. A primary width w1 of the sipe 500 is measurable in the direction S3, as shown in these figures.

Referring to Figs. 3b and 3c, the sipe 500 is arranged between two sipe walls (511, 512), the sipe walls being comprised by the tread block 210. These sipe walls are called a first sipe wall 511 and second sipe wall 512. The tread block 210 also forms the bottom 513 of the sipe 500.

The recesses 521, 522 have the effect that they improve handling of a worn tyre without degrading handling of a new tyre. Moreover, the first and second recesses 521, 522 are, respectively, comprised by a first and a second sipe expansion 531, 532. The sipe expansions 531, 532 make the sipe 500 locally wider in the direction S3 in order to receive more water and/or slush and/or snow from the surface 900 when the tyre is used. The purpose of the sipe expansion 531, 532 is therefore to improve traction on wet and/or snowy road.

To summarize, the embodiments relate to tread block arrangement 200. The tread block arrangement 200 is suitable for a tyre 100 or for a tread band 150 for a tyre 100. The tread block arrangement 200 comprises a tread block 210. The tread block 210 comprises at least a first sipe 500.

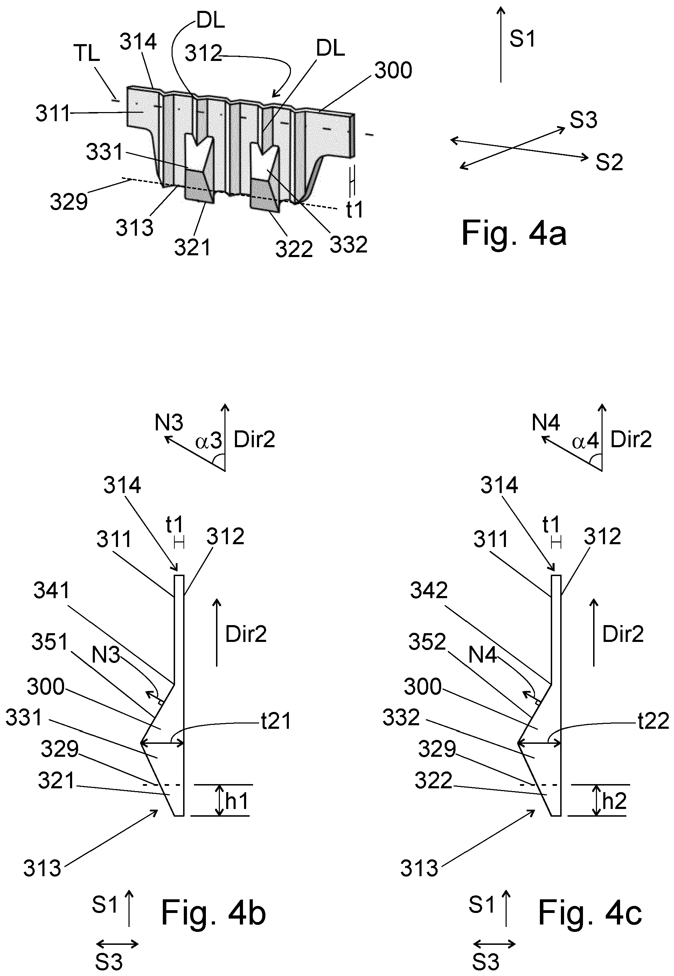

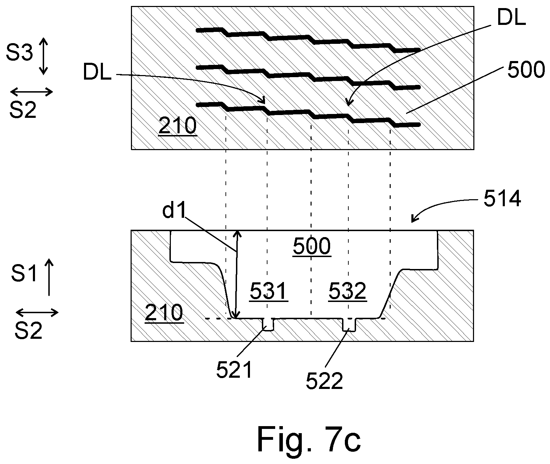

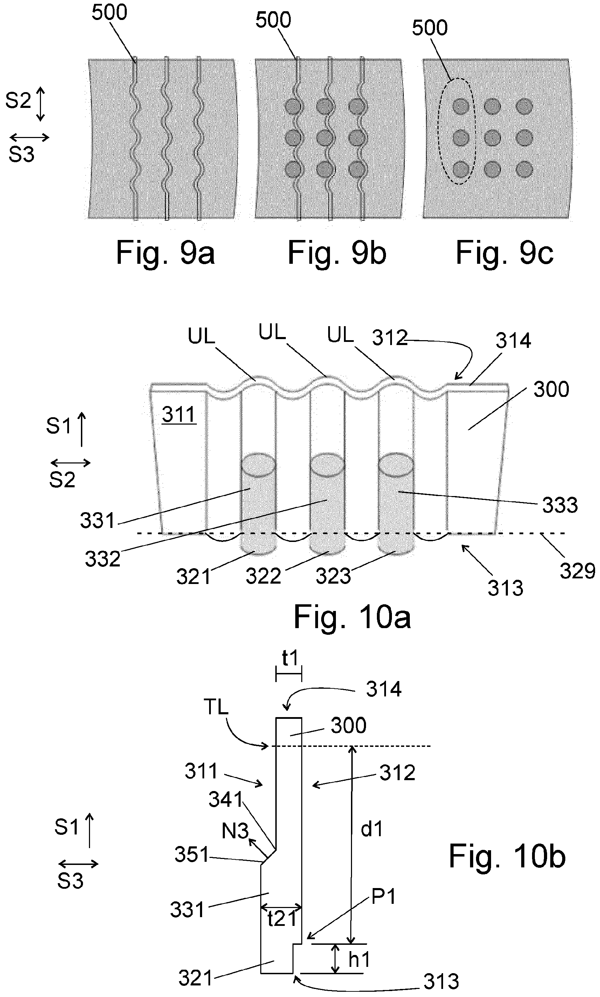

In an embodiment, the first sipe 500 is delimited by a first sipe wall 511, a second sipe wall 512, and a bottom 513 of the first sipe 500. The first sipe 500 comprises the top opening 514. In the embodiment, the top opening 514 of the first sipe 500 has a zig-zag or an undulating pattern. Figs. 4a and 4b show examples of lamella plates for forming a zig-zag pattern shown in Fig. 7a. Fig. 10a shows an example of a lamella plate for forming an undulating pattern shown in Fig. 7b. Fig. 7c shows an example of a sipe having a stepped pattern. A stepped pattern is also a zig-zag pattern.

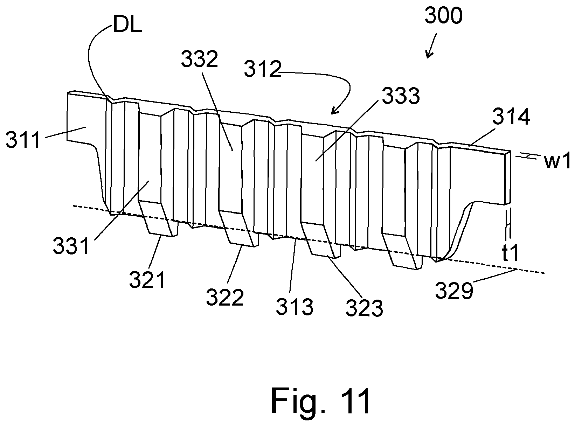

The first sipe wall 511 and the second sipe wall 512 are arranged parallel to each other and define a primary width w1 of the first sipe 500. As readable from the above, a width of the first sipe 500, i.e. a distance between the sipe walls 511, 512, is not constant. However, the primary width w1 of the first sipe 500 is defined as a width of the top opening 514, which may be constant. In case the width of the top opening 514 is not constant, as readable from Fig. 11, the primary width w1 of the first sipe 500 is an average width of the top opening of the first sipe 500, excluding the portions of the top opening that comprise parts of the sipe expansions 531, 532. Reference is made to Fig. 11, even if Fig. 11 shows only a corresponding lamella plate 300.

In the first sipe 500, the bottom 513 of the first sipe 500 is arranged away from the top opening 514 such that the bottom 513 defines a bottom line 529 of the first sipe 500. As shown in Fig. 3a, the bottom line refers to the bottom of the first sipe 500 when the recesses 521, 522 are excluded. A primary depth d1 of the first sipe 500 is defined as a distance between the top opening 514 and the bottom line 529, as shown in Fig. 3a. Thus, the primary depth d1 of the first sipe 500 is arranged between the top opening 514 and the bottom line 529.

The first recess 521 and the second recess 522 intrude to the tread block 210 from the bottom line 529 away from the top opening 514. In this way, the recesses 521, 522 locally deepen the first sipe 500 in a direction that is reverse to the direction S1, as shown in Fig. 3a. Thus, a depth of the first sipe, at the location of a recess 521, 522, is slightly more than the primary depth d1 as defined above.

To provide space for receiving water and/or slush, the first recess 521 is comprised by a first sipe expansion 531. The first sipe expansion 531 extends towards the top opening 514 of the first sipe 500. The first sipe expansion 531 has a secondary first width w21 that exceeds the primary width w1. The secondary first width w21 is measured at a location that is between the bottom line 529 and the top opening 514, as shown in Fig. 3b. The secondary first width w21 is defined as a distance between the sipe walls 511, 512 at that location. The secondary first width w21 is measured in the direction S3, which is perpendicular to a direction S1 of a depth of the first sipe 500 and also is perpendicular to a direction S2 of a length of the first sipe 500.

Likewise, the second recess 522 is comprised by a second sipe expansion 532, the second sipe expansion 532 extending towards the top opening 514 of the first sipe 500 and having a secondary second width w22 as measured at a location that is between the bottom line 529 and the top opening 514. Also the secondary second width w22 exceeds the primary width w1. The secondary second width w22 is measured in the direction S3, which is perpendicular to a direction S1 of a depth of the first sipe 500 and also is perpendicular to a direction S2 of a length of the first sipe 500.

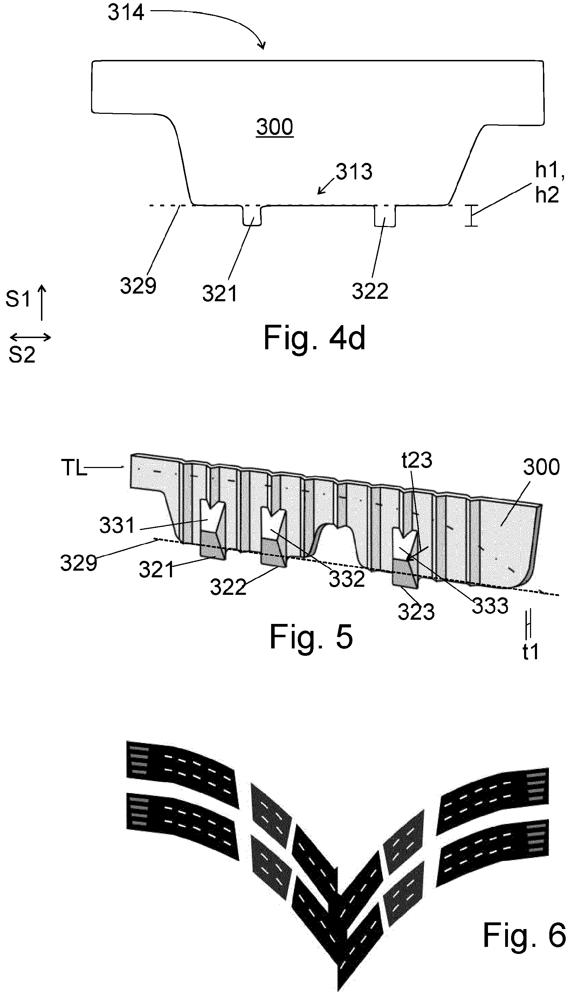

As detailed in connection with background, the first sipe may be made by using a lamella plate 300. For example, the first sipe shown in Figs. 3a to 3c may be made by the lamella plate 300 shown in Fig. 4a. However, a distance Δ21 between the recesses 521, 522 in Fig. 3a is exaggerated compared to the lamella plate of Fig. 4.

In this way, the invention relates also to a lamella plate 300. It is noted, however, that typically the whole lamella plate 300 is not inserted into the tread during manufacturing. Instead, during manufacturing, the tread surface is arranged on a level of a top line TL as shown in Figs. 4a and 4b. Above the top line TP, i.e. between the top line TL and a top edge 314 of the lamella plate 300, the lamella plate 300 may be provided with holes for enabling removal of the lamella plate from the rubber material after curing the rubber material of the tyre or the tread band. To clarify this issue, a primary depth d1 of a first sipe 500 manufacturable by the lamella plate of Fig. 10b is shown in Fig. 10b, provided that the top opening 514 of the sipe 500 would be arranged at the level of the top line TL shown in Fig. 10b. Likewise, the part of the lamella plate 300 of Fig. 10b that remains above the top line TL would not be inserted into the tread.

Figs. 4a to 4d, 5, 10a, and 10b show embodiments of a lamella plate 300 for forming a sipe 500 to a tread block 210 of a tread block arrangement 200. The tread block arrangement 200 is suitable for a tyre 100 or for a tread band 150 for a tyre 100.

Figs 4a to 4d show various views of an embodiment of a lamella plate 300, Fig. 4a being a perspective view and Figs. 4b and 4c cross-sectional views, and Fig. 4d a side view. The directions S1, S2, and S3 are mutually perpendicular. In use, the direction S1 may be substantially parallel to the radial direction SR of the tyre, the radial direction SR being directed away from an axis of rotation. A length of the lamella plate 300 is arranged in the direction S2 and a thickness is arranged the direction S3.

The lamella plate 300 comprises a first surface 311 for forming the first sipe wall 511 of the sipe first 500, a second surface 312 opposite to the first surface 312 for forming the second sipe wall 512 of the first sipe 500, a bottom edge 313 for forming a bottom 513 of the sipe 500, and a top edge 314 opposite the bottom edge 313. A distance between the first surface 311 and the second surface 312 defines a primary thickness t1 of the lamella plate 300. In line with the primary width w1 defined for the first sipe above, the primary thickness t1 of the lamella plate may be the thickness of the lamella plate 300 at a location of the top edge 314. The lamella plate 300 is configured to form the first sipe 500 of which top opening 514 has a zig-zag or an undulating pattern. For this reason, the lamella plate 300 comprises deflection lines DL, shown in Fig. 4a or undulation lines UL shown in Fig. 10a. The deflection lines DL extend in the direction S1 as shown in Fig. 4a. The same applies to the undulation lines UL as shown in Fig. 10a.

Concerning the term "deflection line", when the top opening 514 of the first sipe (of a new tire) has a deflection, i.e. a bend point, and when the tire wear, this deflection moves towards the axis of rotation, and the trace formed by these deflections form the deflection line DL. Reference is made to Fig. 4a.

Concerning the term "undulation line", when the top opening 514 of the first sipe (of a new tyre) has curved parts, each curved part defines a point of undulation (of the new tyre) such that an undulation point is the point of the curved part that defines a local maximum deviation of a position of the top opening 514 from a straight line extending between two ends of the top opening 514. At an undulation point, a tangent of the top opening 514 is parallel to the straight line extending between two ends of the top opening 514. When the tire wears, an undulation point defined in this way moves towards the axis of rotation, and the trace formed by these undulation points form the undulation line UL. For example, if the top opening 514 has a sinusoidal shape, the points defining the amplitude of the sinusoidal shape defines points of undulation. I.e., each minimum and each maximum deviation from a straight line devices one undulation point. And, if the sinusoidal shape extends in the radial direction, the undulation lines extend in the radial direction and each undulation line comprises an undulation point. Reference is made to Figs. 7b and 10a. As readable from Figs. 7a and 7b, the deflection lines and the undulation lines may be substantially radial in a tyre. It is furthermore noted that not all undulation lines have expressly been associated with the symbol UL in Fig. 7b.

To form the first and second recesses 521, 522, the bottom edge 313 is provided with a first bulge 321 and a second bulge 322. The first bulge 321 and the second bulge 322 protrude from a bottom line 329, i.e. bottom line 329 of the lamella plate 300, defined by the bottom edge 313. The first bulge 321 and the second bulge 322 protrude away from the top edge 314, i.e. at least in a direction that is reverse to the direction S1 (see Fig. 4a). The bulges 321, 322 may further protrude in the direction S3, i.e. in a direction of thickness of the lamella plate 300. The bottom edge 313 defines the bottom line 329 such that the bottom line 329 corresponds a bottom edge of such a lamella plate, from which the bulges 321, 322 would be removed.

Referring to Figs. 4a and 4b, the lamella plate 300 comprises a first expanded section 331. The first expanded section 331 comprises the first bulge 321. The first expanded section 331 extends towards the top edge 314. The first expanded section 331 has a secondary first thickness t21 that exceeds the primary thickness t1 of the lamella plate 300. The secondary first thickness t21 is measured at a location that is between the bottom line 329 and the top edge 314, as shown in Fig. 4b. The secondary first thickness t21 is defined as a measure between the second surface 312 (which is opposite the first expanded section 321) and an extremum of the first expanded section 321 on the first side 311. Naturally, the first expanded section 331 may expand also on the second surface 312 of the lamella plate 300.

Likewise, and with reference to Figs. 4a and 4c, the second bulge 322 is comprised by a second expanded section 332 of the lamella plate 300, the second expanded section 332 extending towards the top edge 314 and having a secondary second thickness t22 as measured at a location that is between the bottom line 329 and the top edge 314, the secondary second thickness t22 exceeding the primary thickness t1 of the lamella plate 300. The secondary second thickness t22 is defined as a measure between the second surface 312 (which is opposite the second expanded section 322) and an extremum of the second expanded section 322 on the first side 311. Naturally, the second expanded section 332 may expand also on the second surface 312 of the lamella plate 300.

The lamella plate of Figs. 4a to 4d may be usable e.g. at a central area of a tread. In line with this, the top line TL shown in Fig. 4a is substantially straight.

Fig. 5 shows, in a perspective view, another embodiment of a lamella plate 300. That lamella plate 300 may be usable e.g. at a shoulder area of a tread. In line with this, the top line TL shown in Fig. 5 is curved and follows a surface of the tread on a shoulder area. As evidenced by Fig. 5, a lamella plate 300 may further comprise a third expanded section 333 that comprises a third bulge 323.

**If** the expanded section 331, 332 and/or the sipe expansions 531, 532 do not extend to the top opening 514 of the sipe, as is the case in the embodiments of Figs. 3a to 3c and 4a to 4d and 5, the top opening of the first sipe 500 in a new (i.e. unworn) tyre has a substantially constant width, as shown also in Fig. 2a. However, the tyre wears in use. When the tread has worn to such an extent that the tread surface is arranged at a level of the bottom line 529 of the first sipe, only the recesses 521, 522 remain visible. Such as situation is shown in Fig. 6. By comparing Fig. 6 with Fig. 2c the function of the recesses becomes clear: they provide additional sipes also for a used tyre. However, as discussed in the section "Summary", the tyre performance of an unworn or partially worn tyre is also good.

As detailed above, a purpose of the sipe expansions 531, 532 is to provide space for water and/or slush. However, it has been noticed that if the sipe expansions 531, 532 extend all the way up to the top opening 514, as shown by a corresponding lamella plate 300 in Fig. 11, the sipe expansions 531, 532 may be filled too rapidly, and in this way possibly do not function in an optimal manner. Therefore, preferably the sipe expansions 531, 532 do not extend all the way up to the top opening 514.

Therefore and with reference to Figs. 3b and 3c, in an embodiment, the first sipe expansion 531 and the second sipe expansion 532 only extend towards the top opening 514 so that a top 541 of the first sipe expansion 531 is below the top opening 514 of the first sipe 500 and a top 542 of the second sipe expansion 532 is below the top opening 514 of the first sipe 500. **In** other words, a top 541 of the first sipe expansion 531 is arranged a distance apart from the top opening 514 and a top 542 of the second sipe expansion 532 is arranged a distance apart from the top opening 514.

Correspondingly, and with reference to Figs. 4b and 4c, in an embodiment of a lamella plate 300, the first expanded section 331 and the second expanded section only extend from towards the top edge 314 so that a top 341 of the first expanded section 331 is below the top edge 314 of the lamella plate 300 and a top 342 of the second expanded section 332 is below the top edge 314 of the lamella plate 300.

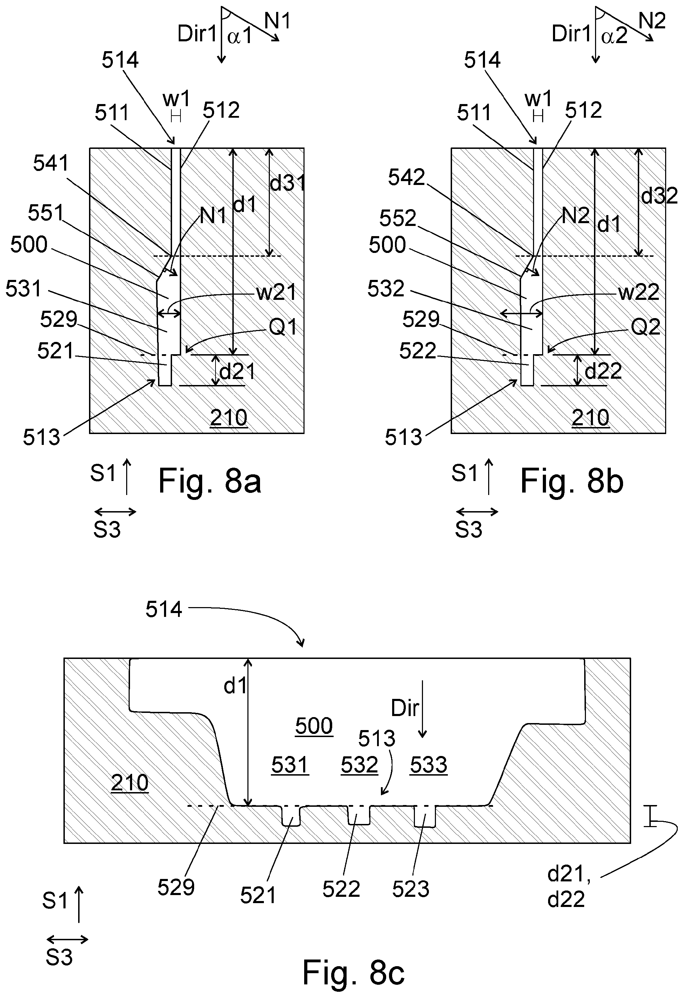

As for a proper location of a top of the sipe expansions 531, 532 and the expanded sections 331, 332, reference is made particularly to Figs. 3b and 3c. **In** an embodiment of a tread block arrangement 200, the first sipe 500 has such a shape that a top 541 of the first sipe expansion 531 is arranged at a tertiary first depth d31 from the top opening 514. **In** the embodiment, the tertiary first depth d31 is 30 % to 60 % of the primary depth d1 of the first sipe 500. Reference is made to Figs. 3b and 3c as well as 8a and 8b. **In** a similar manner, in the embodiment, a top 542 of the second sipe expansion 532 is arranged at a tertiary second depth d32 from the top opening 514. **In** the embodiment, the tertiary second depth d32 is 30 % to 60 % of the primary depth d1 of the first sipe 500. Preferably, the tertiary first depth d31 is 35 % to 55 % of the primary depth d1 of the sipe 500 and the tertiary second depth d32 is 35 % to 55 % of the primary depth d1 of the first sipe 500. However, as readable from Fig. 11, the expanded sections 331, 332 may extend to the top edge 314 of the lamella plate 300, whereby the sipe expansions 531, 532 may extend to the top opening 514.

This can be seen also from a lamella plate 300 of an embodiment. However, as detailed above, a height of the lamella plate 300 may be significantly higher than a depth of a sipe, because during manufacturing, the top edge 314 of the lamella plate and also a part of the lamella plate 300 that is close to the top edge 314 remain outside of the tread that is manufactured.

Therefore, in an embodiment of a lamella plate 300, a top 341 of the first expanded section 331 of the lamella plate 300 is configured to form a top 541 of a first sipe expansion 531, wherein the top 541 of the first sipe expansion 531 is arranged at a depth of 30 % to 60 %, preferably 35 % to 55 %, of a primary depth d1 of the first sipe 500. Moreover, a top 342 of the second expanded section 332 of the lamella plate 300 is configured to form a top 542 of a second sipe expansion 532, wherein the top 542 of the second sipe expansion 532 is arranged at a depth 30 % to 60 %, preferably 35 % to 55 %, of a primary depth d1 of the first sipe 500.

In an embodiment, the sipe expansions 531, 532 are arranged at a location of a deflection line DL or an undulation line UL. More specifically, in an embodiment of a tread block arrangement 200, the first sipe expansion 531 is arranged at a location of a deflection line DL or an undulation line UL of the first sipe 500 and the second sipe expansion 532 is arranged at a location of another deflection line DL or another undulation line UL of the first sipe 500. Likewise, in an embodiment of a lamella plate 300, the first expanded section 331 is arranged at a location of a deflection line DL or an undulation line UL of the lamella plate 300 and the second expanded section 332 is arranged at a location of another deflection line DL or another undulation line UL of the lamella plate 300. Reference is made to Figs. 7a and 7b.

To clarify, Figs. 7a and 7c show in their upper parts, a fist sipe 500 as seen from top, i.e. a top opening 514 of the first sipe. As clearly seen, the top opening 514 of the first sipe 500 has five deflection points, which, when extending in the direction S1, form deflection lines DL, two of which have been indicated by the reference letters DL. In addition, Figs. 7a and 7c show in their lower parts, the first sipe 500 as seen from a side, which shows how the recesses 521, 522 are arranged at the locations of the deflection lines DL. Moreover, because the recesses 521, 522 are comprised by the sipe expansion 531, 532, Fig. 7a and 7c show how sipe expansions 531, 532 are arranged at locations of a deflection lines DL.

Fig. 7b shows the same matter, when first sipe has an undulating shape. In the upper part of Fig. 7b, the sipe expansions 531, 532 are shown by grey colour to show two embodiments: one in which the sipe expansions 531, 532 do extend to the top opening 514, and another in which the sipe expansions 531, 532 do not extend to the top opening 514, as readable e.g. from Figs. 8a to 8c in conjunction with Figs. 10a and 10b.

However, in an embodiment, expanded sections 331, 332 are not arranged at a location of a deflection line DL or an undulation line UL. Correspondingly, in an embodiment of a sipe 500, the sipe expansions 531, 532 are not arranged at a location of a deflection line DL or an undulation line UL. This may be beneficial in terms of manufacturability.

Concerning suitable measures for the bulges 321, 322 and/or the recesses 521, 522, reference is made to Figs. 3b, 3c, 4b, and 4c. The first recess 521 intrudes the tread block 210 from the bottom line 529 by a secondary first depth d21 of the first recess 521. In a preferable embodiment, the secondary first depth d21 is 0.5 mm to 2.0 mm. Preferably, the second recess 522 is sized in a similar manner. Therefore, in an embodiment, the second recess 522 intrudes the tread block 210 from the bottom line 529 by a secondary second depth d22 of the second recess 522, the secondary second depth d22 being 0.5 mm to 2.0 mm. Even if these preferable depths d21, d22 are shown only in some contexts, they are preferable also in other contexts.

A length l21 of the first recess 521 is substantially less than a length of the sipe 500. **In** a preferable embodiment, a length l21 of the first recess 521 is 1 mm to 5 mm. Likewise in a preferable embodiment, a length l22 of the second recess 522 is 1 mm to 5 mm. These measures apply particularly in combination with the secondary first depth d21 and the secondary second depth d22 detailed above. These lengths l21, l22 are defined in the same direction S2 as a length of the first sipe 500. Reference is made to Fig. 3a.

A distance Δ21 between the first recess 521 and the second recess 522 is, in an embodiment, at least 2 mm, such as 2 mm to 8 mm, preferably 2 mm to 4 mm. Reference is made to Fig. 3a. The distance Δ21 is also defined in the same direction S2 as a length of the first sipe 500. Even if the measures l21, l22, and Δ21 are shown only in Fig. 3a, they are applicable also in other embodiments.

It has been found that a thickness of the tread block 210 that has the sipe 500 affects a proper value of the secondary first depth d21 and the secondary second depth d22. In view of what has been said above, in an embodiment, the secondary first depth d21 is 5 % to 20 % of a thickness of the tread block that comprises the sipe having the first recess. Likewise, in an embodiment, the secondary second depth d22 is 5 % to 20 % of a thickness of the tread block that comprises the sipe having the first recess.

Moreover, to maintain sufficient rigidity, preferably, the depth d1 of first sipe 500 is less than a thickness of the tread block 210 comprising the first sipe 500. Thus, a certain thickness of the tread block material is arranged at the bottom of the sipe to ensure sufficient rigidity. Preferably, the depth d1 of first sipe 500 is 0.5 mm to 5 mm less than a thickness of the tread block 210 comprising the first sipe 500. Even more preferably, the depth d1 of first sipe 500 is 1 mm to 2.5 mm less than a thickness of the tread block 210 comprising the first sipe 500.

In an embodiment, a total length of the recesses including the first recess 521 and the second recess 522 and all other recesses of the sipe 500 is 20 % to 40 % of a length between a first extremum E1 and a second extremum E2 of an intersection of the bottom 513 and the bottom line 529. The extremums E1 and E2 are shown in Fig. 3a. Notably, in the embodiment of Fig. 3a, the total length of the recesses including the first recess 521 and the second recess 522 is less than 20 % of a length between the first extremum E1 and the second extremum E2. However, in the sipes 500 manufacturable e.g. by the labella plate 300 of Fig. 11, Fig. 10a, Fig. 5, or Fig. 4a, the ratio is within the preferable limit 20 % to 40 %. For example, a ratio l21/(Δ21+l21) may be in the range 20 % to 40 %. In other words, in an embodiment, a ratio (Δ21/l21) of the distance Δ21 between the first recess 521 and the second recess 522 to the length l21 of the first recess 521 is 1.5 to 4.

These measures have been found to sufficiently improve wet traction and handling of a worn tyre, yet not affecting properties of a new tyre.

Likewise, in the lamella plate 300, the first bulge 321 protrudes from the bottom line 329 by a first height h1 of the first bulge 321. As detailed above, the first bulge 321 protrudes from the bottom line 329 away from the 314 top edge 314 by the first height h1. In an embodiment, the first height h1 of the first bulge 321 is 0.5 mm to 2.0 mm. Moreover, in the lamella plate 300, the second bulge 322 protrudes from the bottom line 329 by a second height h2 of the second bulge 322. As detailed above, the second bulge 322 protrudes from the bottom line 329 away from the top edge 314 by the second height h2. In an embodiment, the second height h2 of the second bulge 321 is 0.5 mm to 2.0 mm. What has been said about the lengths l21, l22 of the first recess 521 and the second recess 522 apply to the lengths of the first and second bulges 321, 322. What has been said about the distance Δ21 between the first recess 521 and the second recess 522 applies to a distance between the first and second bulges 321, 322.

To improve the capability of receiving water and/or slush of the first sipe 500 and in this way improving the wet traction and handling, the secondary widths w21, w22 of the first sipe exceed the primary width w1, as discussed above. However, to sufficiently increase the capability of receiving water and/or slush, the secondary widths w21, w22 should exceed the primary width w1 by a sufficient degree. As for a sufficient degree, in an embodiment the secondary first width w21 of the first sipe expansion 531 of the first sipe 500 exceeds the primary width w1 of the first sipe 500 by at least 50 %, and the secondary second width w22 of the second sipe expansion 532 of the first sipe 500 exceeds the primary width w1 of the first sipe 500 by at least 50 %. However, for manufacturing reasons, the first width w21 and the second width w22 may be, e.g., at most 4 mm. Preferably, the secondary first width w21 of the first sipe expansion 531 of the first sipe 500 exceeds the primary width w1 of the first sipe 500 by at least 100 % or by at least 150 %, and the secondary second width w22 of the second sipe expansion 532 of the first sipe 500 exceeds the primary width w1 of the first sipe 500 by at least 100 % or by at least 150 %. The secondary first width w21 of the first sipe expansion 531 of the first sipe 500 may exceed the primary width w1 of the first sipe 500 by 50 % - 400 % or by 100 % - 400 % or by 150 % - 300 %, and the secondary second width w22 of the second sipe expansion 532 of the first sipe 500 may exceed the primary width w1 of the first sipe 500 by 50 % - 400 % or by 100 % - 400 % or by 150 % - 300 %.

Likewise, in an embodiment of a lamella plate 300, the secondary first thickness t21 of the first expanded section 331 of the lamella plate 300 exceeds the primary thickness t1 of the lamella plate 300 by at least 50 %, by at least 100 %, by 50 % to 400 %, by 100 % to 400 %, or by 150 % - 300 %. Moreover, the secondary second thickness t22 of the second expanded section 332 of the lamella plate 300 exceeds the primary thickness t1 of the lamella plate 300 by at least 50 %, by at least 100 %, by 50 % to 400 %, by 100 % to 400 %, or by 150 % - 300 %.

The inventors have also found that in certain embodiments it may be hard to remove the lamella plate 300 from the cured tread block arrangement without breaking the rubber material of the tread block 210. This is because, in some cases, the expanded sections 331, 332 may resist removal of the lamella plate 300 from the tread block 210, and, if removed with excessive force, the rubber material will break.

The inventors have also found that the resistance for removal can be diminished by making the top surfaces of the expanded sections 331, 332 of the lamella plate 300 inclined as shown in Figs. 4a, 4b, 4c, 5, 8a, 8b, and 10b.

Referring to Figs. 4b and 4c, a top surface 351 of the first expanded section 331 is inclined in such a way that a normal N3 of the top surface 351 of the first expanded section 331, i.e. a third normal N3, forms an angle α3, i.e. a third angle α3, with a second direction Dir2 that is directed from the bottom edge 313 of the lamella plate 300 to the top edge 314 of the lamella plate 300. In use of the plate 300, the direction Dir2 will be parallel to the direction S1 of the sipe 500. The third angle α3 is 20 to 70 degrees, preferably 30 to 60 degrees. Likewise, a top surface 352 of the second expanded section 332 is inclined in such a way that a normal N4 of the top surface 352 of the second expanded section 332, i.e. a fourth normal N4, forms an angle α4, i.e. a fourth angle α4 with the second direction Dir2. The fourth angle α4 is 20 to 70 degrees, preferably 30 to 60 degrees. The third and fourth angles α3 and α4 are shown in Figs. 4b and 4c, respectively. For clarity, the direction (vectors) that define the angles α3 and α4 are shown also in another location of the figures. As conventional, the direction of the third normal N3 is directed away from the lamella plate 300 (and not into it). The direction of the fourth normal N4 is directed away from the lamella plate 300 (and not into it).

The inclination of the top surfaces 351, 352 shows in a corresponding matter in the first sipe 500. Referring to Figs. 3b and 3b, the first sipe 500 defines a top surface 551 of the first sipe expansion 531 and a top surface 552 of the second sipe expansion 532. The top surface 551 of the first sipe expansion 531 is inclined in such a way that a normal N1 of the top surface 551 of the first sipe expansion 531, i.e. a first normal N1, forms an angle α1, i.e. a first angle α1, with a first direction Dir1 that is directed from the top opening 514 to the bottom 513 of the first sipe 500. The first angle α1 is 20 to 70 degrees, preferably 30 to 60 degrees. As the first normal N1 is a normal of a surface formed by the tread block 210, the first normal N1 is directed towards the sipe 500, i.e. it is not directed into the tread block 210. Reference in made to Fig. 3b. The direction Dir1 is reverse to the direction S1 as shown in Figs. 3b and 3c.

In a corresponding manner, a top surface 552 of the second sipe expansion 532 is inclined in such a way that a normal N2 of the top surface 552 of the second sipe expansion 532, i.e. a second normal N2, forms an angle α2, i.e. a second angle α2, with the first direction Dir1, which is directed from the top opening 514 to the bottom 513 of the first sipe 500. As the second normal N2 is a normal of a surface formed by the tread block 210, the second normal N2 is directed towards the sipe 500, i.e. it is not directed into the tread block 210. Reference in made to Fig. 3c. The second angle α2 is 20 to 70 degrees, preferably 30 to 60 degrees.

Referring to Figs. 5 and 10a, an embodiment of a lamella plate 300 comprises a third bulge 323. More precisely in an embodiment of a lamella plate, the bottom edge 313 is provided with the first bulge 321, the second bulge 322, and a third bulge 323. The first bulge 321, the second bulge 322 and the third bulge 323 protrude from the bottom line 329. What has been said about the first and second bulges 321, 322 and the first and second expanded sections 331, 332 applies. In addition, the third bulge 323 is comprised by a third expanded section 333 of the lamella plate 300. The third expanded section 333 extends towards the top edge 314. The third expanded section 333 has a secondary third thickness t23. The secondary third thickness t23 is shown in Fig. 5 and measured as a measure between the second surface 312 (which is opposite the third expanded section 323) and an extremum of the third expanded section 323; i.e. in a similar manner as shown in Figs. 4b and 4c for the secondary first and secondary second thicknesses. Moreover, the secondary third thickness t23 is measured at a location that is between the bottom line 329 and the top edge 314. In addition, the secondary third thickness t22 exceeds the primary thickness t1 of the lamella plate 300.

This applies *mutatis mutandis* to the first sipe 500. Thus, in an embodiment, the bottom 513 of the first sipe 500 is provided with the first recess 521, the second recess 522, and a third recess 523 (see, e.g. Fig. 8c). What has been said concerning the first recess 521 and the second recess 522 applies. Also the third recess 523 intrudes the tread block 210 from the bottom line 529 away from the top opening 514. Moreover, the third recess 523 is comprised by a third sipe expansion 533, the third sipe expansion 533 extending towards the top opening 514 of the first sipe 500 and having a secondary third width exceeding the primary width w1. The secondary third width is measured at a location that is between the bottom line 529 and the top opening 514. What has been said about a depth d21 and a length l21 of the first recess 521 applies to the third recess 523.

As shown in Figs. 4a and 5, the expanded sections 331, 332, 333 of the lamella plate may have a prismatic shape. However, as shown in Fig. 10a, the expanded sections 331, 332, 333 of the lamella plate 300 may have a circular cross-section, the cross-section being defined on a plane that has a normal in a direction S1 that is directed from the bottom edge 313 to the top edge 314.

The top surface of the first expanded section 331 in Fig. 10a is not inclined. However, as detailed above, preferably the top surface is inclined. Figure 10b shows a cross section of such a lamella plate 300 that is otherwise identical to that of Fig. 10a, but the top surface 351 of the first expanded section 331 is inclined. In line with Fig. 4b, the third normal N3 of the top surface 351 has also been indicated. What has been said about the definition and magnitude of the third angle α3 applies.

The embodiment of Fig. 10a or Fig. 10b may be beneficial for reasons of manufacturing the lamella plate 300 and/or for upgrading an existing mould for making a tyre. To improve the properties of the tyre, an existing lamella plate can be provided with pieces of a circular wire cut to desired length. The pieces of cut wire can be attached to the existing lamella plate so that the pieces of cut wire will form the expanded sections 331, 332, 333 of the lamella plate 300 as shown in Fig. 10a. Such pieces may be applied in particular to an undulating sipe. Moreover, the first expanded section 331 may be arranged at a location of an undulation line UL of the lamella plate 300 on a concave side of the lamella plate 300 at the location of the undulation line UL. Likewise, the second expanded section 332 may be arranged at a location of another undulation line UL of the lamella plate 300 on a concave side of the lamella plate 300 at the location of the other undulation line UL.

The shape of the top opening 514 of the sipe formed by such a lamella plate depends on the degree of wear of the tyre. Referring to Figs. 9a to 9c, provided that a first sipe 500 is formed by using the lamella plate 300 of Fig. 10a, the first sipe of a new tyre resembles that of Fig. 9a. When the tyre wears such that the top surface 551 of the first sipe expansion 531 is worn away, the top opening of the sipe of the worn tyre resembles that of Fig. 9b. However, when the tyre further wears such that the tread surface reaches the bottom line 529 of the first sipe 500, the worn tyre resembles that of Fig. 9c.

The first sipe 500 formed by a lamella plate 300 that is otherwise identical to that of Fig. 10a, but the top surface 351 of the first expanded section 331 is inclined as in Fig. 10b, is depicted in Figs. 8a to 8c. The reference numbers shown in Figs. 8a to 8c have been explained above in the context of the embodiment shown in Figs. 3a to 3c. What has been said in that context applies mutatis mutandis in the context of Figs. 8a to 8c.

As indicated in the context of Figs. 10a and 10b, the lamella plate 300 may be manufactured by fixing thereto portions of tubular elements, such as cut wires. However, as readable from Figs. 4a and 5, also another embodiment of the lamella plate 300 may be manufactured e.g. by fixing to a plate-like lamella plate parts for forming the expanded sections 331, 332, 333. This provides for an easy and cost-effective way of producing such a lamella plate 300. As shown in Figs. 4b, 4c, and 11, the expanded sections 331, 332 may extend also directly beneath a main part of the lamella plate 30.

In some cases the part that is attached to the original lamella plate (i.e. The one without the expanded sections 331, 332, 333) to form the expanded section of the lamella plate 300, does not have a recess for receiving a part of the original lamella plate. In such cases, when the part is attached to a first side of the original lamella plate, the resulting lamella plate 300 will have on the second side a step at the location of the bottom line 329. Likewise, that embodiment of the lamella plate 300 comprises on the second side 312 a first step P1 that is arranged at the location of a crossing of the bottom line 329 and the first expanded section 331. Reference is made to Fig. 10b. Moreover, that embodiment of the lamella plate 300 comprises on the second side 312 a second step (not shown) that is arranged at the location of a crossing of the bottom line 329 and the second expanded section 332. Preferably, a width of the first step P1 equals the primary thickness t1. Preferably, a width of the second step equals the primary thickness t1. The widths of the steps are measured in the direction S3, in which also the direction of the primary thickness t1 is defined (see Fig. 10a. The second step would be visible in exactly the same manner as the first step P1 of Fig. 10b, in a figure showing a cross section of the second expanded section 332 instead of the cross section of first expanded section 331 shown in Fig. 10b. Reference is made also to Figs. 8a and 8b.

Likewise, in an embodiment of the tread block arrangement 200, the second wall 512 of the first sipe 500 comprises first footstep Q1 that is arranged at the location of a crossing of the bottom line 529 of the first sipe 500 and the first sipe expansion 531. Reference is made to Fig. 8a. In a similar manner, the second wall 512 of the first sipe 500 comprises a second footstep Q2 that is arranged at the location of a crossing of the bottom line 529 of the first sipe 500 and the second sipe expansion 532. Reference is made to Fig. 8b. Preferably, a width of the first footstep Q1 equals the primary width w1. Preferably, a width of the second footstep Q2 equals the primary width w1. The widths of the footsteps are measured in the direction S3, in which also the primary width w1 is defined (see Figs. 3b and 3c).

Referring to Fig. 1a, an embodiment of a tyre 100 comprises a tread block arrangement 200 having the tread block 210 having the first sipe 500 as disclosed above. A tread block may comprise multiple sipes each of which comprise the recesses 521, 522 (and optionally 523) as discussed above. A tread block arrangement may comprise multiple tread blocks, each comprising multiple sipes, each of which sipes comprise the recesses 521, 522 (and optionally 523) as discussed above.

The tyre 100 is preferably a pneumatic tyre 100, such as a pneumatic tyre for a motor vehicle, in particular to a pneumatic tyre for a motor vehicle weighing from 750 kg to 5000 kg. The tyre has a tread 110 comprising the tread block arrangement 200 as disclosed above.

## Claims

1. A tread block arrangement (200) suitable for a tyre (100) or for a tread band (150) for a tyre (100), the tread block arrangement (200) comprising:
- a tread block (210) comprising a first sipe wall (511), a second sipe wall (512), and a bottom (513) delimiting a first sipe (500) wherein
- the first sipe (500) comprises a top opening (514),
- the first sipe wall (511) and the second sipe wall (512) are arranged parallel to each other and define a primary width (w1) of the first sipe (500), the primary width (w1) of the first sipe (500) being a width of the top opening (514),
- the bottom (513) defines a bottom line (529) of the first sipe, wherein a primary depth (d1) of the first sipe (500) is arranged between the top opening (514) and the bottom line (529),
- the bottom (513) of the first sipe (500) is provided with at least a first recess (521) and a second recess (522), the first recess (521) and the second recess (522) intruding the tread block (210) from the bottom line (529) away from the top opening (514),
- the first recess (521) is comprised by a first sipe expansion (531), the first sipe expansion (531) extending towards the top opening (514) of the first sipe (500) and having a secondary first width (w21) as measured between the first sipe wall (511) and the second sipe wall (512) at a location between the bottom line (529) and the top opening (514), the secondary first width (w21) exceeding the primary width (w1), and
- the second recess (522) is comprised by a second sipe expansion (532), the second sipe expansion (532) extending towards the top opening (514) of the first sipe (500) and having a secondary second width (w22) as measured between the first sipe wall (511) and the second sipe wall (512) at a location between the bottom line (529) and the top opening (514), the secondary second width (w22) exceeding the primary width (w1), **characterized in that**
- the top opening (514) of the first sipe (500) has a zig-zag or an undulating pattern,
- a top surface (551) of the first sipe expansion (531) is inclined in such a way that a first normal (N1) of the top surface (551) of the first sipe expansion (531) forms a first angle (α1) of 20 to 70 degrees with a first direction (Dir1) that is directed from the top opening (514) to the bottom (513) of the first sipe (500), and
- a top surface (552) of the second sipe expansion (532) is inclined in such a way that a second normal (N2) of the top surface (552) of the second sipe expansion (532) forms a second angle (α2) of 20 to 70 degrees with the first direction (Dir1).

2. The tread block arrangement (200) of the claim 1, wherein
- the first recess (521) intrudes the tread block (210) from the bottom line (529) by a secondary first depth (d21) of the first recess (521), the secondary first depth (d21) being 0.5 mm to 2.0 mm and
- the second recess (522) intrudes the tread block (210) from the bottom line (529) by a secondary second depth (d22) of the second recess (522), the secondary second depth (d22) being 0.5 mm to 2.0 mm.

3. The tread block arrangement (200) of claim 1 or 2, wherein
- the secondary first width (w21) of the first sipe expansion (531) of the first sipe (500) exceeds the primary width (w1) of the first sipe (500) by at least 50 %, e.g., the secondary first width (w21) of the first sipe expansion (531) of the first sipe (500) exceeds the primary width (w1) of the first sipe (500) by 50 to 400 %; and
- the secondary second width (w22) of the second sipe expansion (532) of the first sipe (500) exceeds the primary width (w1) of the first sipe (500) by at least 50 %, e.g., the secondary second width (w22) of the second sipe expansion (532) of the first sipe (500) exceeds the primary width (w1) of the first sipe (500) by 50 % to 400 %.

4. The tread block arrangement of any of the claims 1 to 3, wherein
- a length (121) of the first recess (521) is 1 mm to 5 mm and
- a length (l22) of the second recess (522) is 1 mm to 5 mm.

5. The tread block arrangement of any of the claims 1 to 4, wherein
- a distance (Δ21) between the first recess (521) and the second recess (522) is at least 2 mm, such as 2 mm to 8 mm.

6. The tread block arrangement of any of the claims 1 to 5, wherein
- a ratio (Δ21/l21) of a distance (Δ21) between the first recess (521) and the second recess (522) to a length (121) of the first recess (521) is 1.5 to 4.

7. The tread block arrangement (200) of any of the claims 1 to 6, wherein
- a top (541) of the first sipe expansion (531) is arranged at a tertiary first depth (d31) from the top opening (514), the tertiary first depth (d31) being 30 % to 60 % of the primary depth (d1) of the first sipe (500) and
- a top (542) of the second sipe expansion (532) is arranged at a tertiary second depth (d32) from the top opening (514), the tertiary second depth (d32) being 30 % to 60 % of the primary depth (d1) of the first sipe (500).

8. A tyre having (100) a tread (110) comprising the tread block arrangement (200) of any of the claims 1 to 7.

9. A lamella plate (300) for forming a first sipe (500) to a tread block (210) of a tread block arrangement (200) suitable for a tyre (100) or for a tread band (150) for a tyre (100), the lamella plate (300) comprising:
- a first surface (311) for forming a first sipe wall (511) of the first sipe (500),
- a second surface (312) opposite to the first surface (312) for forming a second sipe wall (512) of the first sipe (500),
- a bottom edge (313) for forming a bottom (513) of the first sipe (500), and
- a top edge (314) opposite the bottom edge (313), wherein
- a distance between the first surface (311) and the second surface (312) defines a primary thickness (t1) of the lamella plate (300),
- the bottom edge (313) is provided with a first bulge (321) and a second bulge (322), the first bulge (321) and the second bulge (322) protruding from a bottom line (329) defined by the bottom edge (313) away from the top edge (314),
- the first bulge (321) is comprised by a first expanded section (331) of the lamella plate (300), the first expanded section (331) extending towards the top edge (314) and having a secondary first thickness (t21) as measured at a location between the bottom line (329) and the top edge (314), the secondary first thickness (t21) exceeding the primary thickness (t1) of the lamella plate (300), and
- the second bulge (322) is comprised by a second expanded section (332) of the lamella plate (300), the second expanded section (332) extending towards the top edge (314) and having a secondary second thickness (t22) as measured at a location between the bottom line (329) and the top edge (314), the secondary second thickness (t22) exceeding the primary thickness (t1) of the lamella plate (300), **characterized in that**
- the lamella plate (300) is configured to form a first sipe (500) of which top opening (514) has a zig-zag or an undulating pattern,
- a top surface (351) of the first expanded section (331) is inclined in such a way that a third normal (N3) of the top surface (351) of the first expanded section (331) forms a third angle (α3) with a second direction (Dir2) that is directed from the bottom edge (313) to the top edge (314), the third angle (α3) being 20 to 70 degrees, and
- a top surface (352) of the second expanded section (332) is inclined in such a way that a fourth normal (N4) of the top surface (352) of the second expanded section (332) forms a fourth angle (α4) with the second direction (Dir2), the fourth angle (α4) being 20 to 70 degrees.

10. The lamella plate (300) of the claim 9, wherein
- the first bulge (321) protrudes from the bottom line (329) by a first height (h1) of the first bulge (321), the first height (h1) of the first bulge (321) being 0.5 mm to 2.0 mm and
- the second bulge (322) protrudes from the bottom line (329) by a second height (h2) of the second bulge (322), the second height (h2) of the second bulge (322) being 0.5 mm to 2.0 mm.

11. The lamella plate (300) of the claim 9 or 10, wherein
- the secondary first thickness (t21) of the first expanded section (331) of the lamella plate (300) exceeds the primary thickness (t1) of the lamella plate (300) by at least 50 %, e.g., the secondary first thickness (t21) of the first expanded section (331) of the lamella plate (300) exceeds the primary thickness (t1) of the lamella plate (300) by 50 % to 400 %, and
- the secondary second thickness (t22) of the second expanded section (332) of the lamella plate (300) exceeds the primary thickness (t1) of the lamella plate (300) by at least 50 %, e.g., the secondary second thickness (t22) of the second expanded section (332) of the lamella plate (300) exceeds the primary thickness (t1) of the lamella plate (300) by 50 % to 400 %.

12. The lamella plate (300) of any of the claims 9 to 11, wherein
- a length of the first bulge (321) is 1 mm to 5 mm and
- a length of the second bulge (322) is 1 mm to 5 mm.

13. The lamella plate (300) of any of the claims 9 to 12, wherein
- a distance between the first bulge (321) and the second bulge (322) is at least 2 mm, such as 2 mm to 8 mm.

14. The lamella plate (300) of any of the claims 9 to 13, wherein
- a ratio of a distance between the first bulge (321) and the second bulge (322) to a length of the first bulge (321) is 1.5 to 4.

15. The lamella plate (300) of any of the claims 9 to 14, wherein
- a top (341) of the first expanded section (331) is configured to form a top (541) of a first sipe expansion (531), wherein the top (541) of the first sipe expansion (531) is arranged at a depth of 30 % to 60 % of a primary depth (d1) of the first sipe (500) and
- a top (342) of the second expanded section (332) is configured to form a top (542) of a second sipe expansion (532), wherein the top (542) of the second sipe expansion (532) is arranged at a depth of 30 % to 60 % of a primary depth (d1) of the first sipe (500).

## Patentansprüche

1. Eine Profilblockanordnung (200), die für einen Reifen (100) oder für ein Laufstreifenband (150) für einen Reifen (100) geeignet ist, wobei die Profilblockanordnung (200) umfasst:
- einen Profilblock (210), der eine erste Lamellenwand (511), eine zweite Lamellenwand (512) und einen Boden (513) umfasst, die eine erste Lamelle (500) begrenzen, wobei
- die erste Lamelle (500) eine obere Öffnung (514) umfasst,
- die erste Lamellenwand (511) und die zweite Lamellenwand (512) parallel zueinander angeordnet sind und eine Primärbreite (w1) der ersten Lamelle (500) definieren, wobei die Primärbreite (w1) der ersten Lamelle (500) eine Breite der oberen Öffnung (514) ist,
- der Boden (513) eine Bodenlinie (529) der ersten Lamelle definiert, wobei eine Primärtiefe (d1) der ersten Lamelle (500) zwischen der oberen Öffnung (514) und der Bodenlinie (529) angeordnet ist,
- der Boden (513) der ersten Lamelle (500) mit mindestens einer ersten Vertiefung (521) und einer zweiten Vertiefung (522) versehen ist, wobei die erste Vertiefung (521) und die zweite Vertiefung (522) von der Bodenlinie (529) weg von der oberen Öffnung (514) in den Profilblock (210) eindringen,
- die erste Vertiefung (521) von einer ersten Lamellenerweiterung (531) umfasst ist, wobei sich die erste Lamellenerweiterung (531) zu der oberen Öffnung (514) der ersten Lamelle (500) hin erstreckt und eine sekundäre erste Breite (w21), gemessen zwischen der ersten Lamellenwand (511) und der zweiten Lamellenwand (512) an einer Stelle zwischen der Bodenlinie (529) und der oberen Öffnung (514), aufweist, wobei die sekundäre erste Breite (w21) die Primärbreite (w1) überschreitet, und
- die zweite Vertiefung (522) von einer zweiten Lamellenerweiterung (532) umfasst ist, wobei sich die zweite Lamellenerweiterung (532) zu der oberen Öffnung (514) der ersten Lamelle (500) hin erstreckt und eine sekundäre zweite Breite (w22), gemessen zwischen der ersten Lamellenwand (511) und der zweiten Lamellenwand (512) an einer Stelle zwischen der Bodenlinie (529) und der oberen Öffnung (514), aufweist, wobei die sekundäre zweite Breite (w22) die Primärbreite (w1) überschreitet, **dadurch gekennzeichnet, dass**
- die obere Öffnung (514) der ersten Lamelle (500) ein Zickzack- oder ein Wellenmuster aufweist,
- eine obere Fläche (551) der ersten Lamellenerweiterung (531) derart geneigt ist, dass eine erste Normale (N1) der oberen Fläche (551) der ersten Lamellenerweiterung (531) mit einer ersten Richtung (Dir1), die von der oberen Öffnung (514) zu dem Boden (513) der ersten Lamelle (500) gerichtet ist, einen ersten Winkel (α1) von 20 bis 70 Grad bildet, und
- eine obere Fläche (552) der zweiten Lamellenerweiterung (532) derart geneigt ist, dass eine zweite Normale (N2) der oberen Fläche (552) der zweiten Lamellenerweiterung (532) mit der ersten Richtung (Dir1) einen zweiten Winkel (α2) von 20 bis 70 Grad bildet.

2. Die Profilblockanordnung (200) nach Anspruch 1, wobei
- die erste Vertiefung (521) um eine sekundäre erste Tiefe (d21) der ersten Vertiefung (521) von der Bodenlinie (529) in den Profilblock (210) eindringt, wobei die sekundäre erste Tiefe (d21) 0,5 mm bis 2,0 mm beträgt, und
- die zweite Vertiefung (522) um eine sekundäre zweite Tiefe (d22) der zweiten Vertiefung (522) von der Bodenlinie (529) in den Profilblock (210) eindringt, wobei die sekundäre zweite Tiefe (d22) 0,5 mm bis 2,0 mm beträgt.

3. Die Profilblockanordnung (200) nach Anspruch 1 oder 2, wobei
- die sekundäre erste Breite (w21) der ersten Lamellenerweiterung (531) der ersten Lamelle (500) die Primärbreite (w1) der ersten Lamelle (500) um mindestens 50 % überschreitet, z. B. die sekundäre erste Breite (w21) der ersten Lamellenerweiterung (531) der ersten Lamelle (500) die Primärbreite (w1) der ersten Lamelle (500) um 50 bis 400 % überschreitet; und
- die sekundäre zweite Breite (w22) der zweiten Lamellenerweiterung (532) der ersten Lamelle (500) die Primärbreite (w1) der ersten Lamelle (500) um mindestens 50 % überschreitet, z. B. die sekundäre zweite Breite (w22) der zweiten Lamellenerweiterung (532) der ersten Lamelle (500) die Primärbreite (w1) der ersten Lamelle (500) um 50 % bis 400 % überschreitet.

4. Die Profilblockanordnung nach einem der Ansprüche 1 bis 3, wobei
- eine Länge (l21) der ersten Vertiefung (521) 1 mm bis 5 mm beträgt und
- eine Länge (l22) der zweiten Vertiefung (522) 1 mm bis 5 mm beträgt.

5. Die Profilblockanordnung nach einem der Ansprüche 1 bis 4, wobei
- ein Abstand (Δ21) zwischen der ersten Vertiefung (521) und der zweiten Vertiefung (522) mindestens 2 mm, beispielsweise 2 mm bis 8 mm, beträgt.

6. Die Profilblockanordnung nach einem der Ansprüche 1 bis 5, wobei
- ein Verhältnis (Δ21/l21) eines Abstands (Δ21) zwischen der ersten Vertiefung (521) und der zweiten Vertiefung (522) zu einer Länge (l21) der ersten Vertiefung (521) 1,5 bis 4 beträgt.

7. Die Profilblockanordnung (200) nach einem der Ansprüche 1 bis 6, wobei
- eine Oberseite (541) der ersten Lamellenerweiterung (531) in einer tertiären ersten Tiefe (d31) von der oberen Öffnung (514) angeordnet ist, wobei die tertiäre erste Tiefe (d31) 30 % bis 60 % der Primärtiefe (d1) der ersten Lamelle (500) beträgt, und
- eine Oberseite (542) der zweiten Lamellenerweiterung (532) in einer tertiären zweiten Tiefe (d32) von der oberen Öffnung (514) angeordnet ist, wobei die tertiäre zweite Tiefe (d32) 30 % bis 60 % der Primärtiefe (d1) der ersten Lamelle (500) beträgt.

8. Ein Reifen (100), der einen Laufstreifen (110) aufweist, der die Profilblockanordnung (200) nach einem der Ansprüche 1 bis 7 umfasst.

9. Ein Lamellenblech (300) zum Ausbilden einer ersten Lamelle (500) in einem Profilblock (210) einer Profilblockanordnung (200), die für einen Reifen (100) oder für ein Laufstreifenband (150) für einen Reifen (100) geeignet ist, wobei das Lamellenblech (300) umfasst:
- eine erste Oberfläche (311) zum Ausbilden einer ersten Lamellenwand (511) der ersten Lamelle (500),
- eine der ersten Oberfläche (312) gegenüberliegende zweite Oberfläche (312) zum Ausbilden einer zweiten Lamellenwand (512) der ersten Lamelle (500),
- eine Unterkante (313) zum Ausbilden eines Bodens (513) der ersten Lamelle (500), und
- eine der Unterkante (313) gegenüberliegende Oberkante (314), wobei
- ein Abstand zwischen der ersten Oberfläche (311) und der zweiten Oberfläche (312) eine Primärdicke (t1) des Lamellenblechs (300) definiert,
- die Unterkante (313) mit einer ersten Ausbuchtung (321) und einer zweiten Ausbuchtung (322) versehen ist, wobei die erste Ausbuchtung (321) und die zweite Ausbuchtung (322) von einer durch die Unterkante (313) definierten Bodenlinie (329) weg von der Oberkante (314) vorstehen,
- die erste Ausbuchtung (321) von einem ersten erweiterten Abschnitt (331) des Lamellenblechs (300) umfasst ist, wobei sich der erste erweiterte Abschnitt (331) zu der Oberkante (314) hin erstreckt und eine sekundäre erste Dicke (t21), gemessen an einer Stelle zwischen der Bodenlinie (329) und der Oberkante (314), aufweist, wobei die sekundäre erste Dicke (t21) die Primärdicke (t1) des Lamellenblechs (300) überschreitet, und
- die zweite Ausbuchtung (322) von einem zweiten erweiterten Abschnitt (332) des Lamellenblechs (300) umfasst ist, wobei sich der zweite erweiterte Abschnitt (332) zu der Oberkante (314) hin erstreckt und eine sekundäre zweite Dicke (t22), gemessen an einer Stelle zwischen der Bodenlinie (329) und der Oberkante (314), aufweist, wobei die sekundäre zweite Dicke (t22) die Primärdicke (t1) des Lamellenblechs (300) überschreitet, **dadurch gekennzeichnet, dass**
- das Lamellenblech (300) dazu ausgebildet ist, eine erste Lamelle (500) auszubilden, deren obere Öffnung (514) ein Zickzack- oder ein Wellenmuster aufweist,
- eine obere Fläche (351) des ersten erweiterten Abschnitts (331) derart geneigt ist, dass eine dritte Normale (N3) der oberen Fläche (351) des ersten erweiterten Abschnitts (331) mit einer zweiten Richtung (Dir2), die von der Unterkante (313) zu der Oberkante (314) gerichtet ist, einen dritten Winkel (α3) bildet, wobei der dritte Winkel (α3) 20 bis 70 Grad beträgt, und
- eine obere Fläche (352) des zweiten erweiterten Abschnitts (332) derart geneigt ist, dass eine vierte Normale (N4) der oberen Fläche (352) des zweiten erweiterten Abschnitts (332) mit der zweiten Richtung (Dir2) einen vierten Winkel (α4) bildet, wobei der vierte Winkel (α4) 20 bis 70 Grad beträgt.

10. Das Lamellenblech (300) nach Anspruch 9, wobei
- die erste Ausbuchtung (321) um eine erste Höhe (h1) der ersten Ausbuchtung (321) von der Bodenlinie (329) vorsteht, wobei die erste Höhe (h1) der ersten Ausbuchtung (321) 0,5 mm bis 2,0 mm beträgt, und
- die zweite Ausbuchtung (322) um eine zweite Höhe (h2) der zweiten Ausbuchtung (322) von der Bodenlinie (329) vorsteht, wobei die zweite Höhe (h2) der zweiten Ausbuchtung (322) 0,5 mm bis 2,0 mm beträgt.

11. Das Lamellenblech (300) nach Anspruch 9 oder 10, wobei
- die sekundäre erste Dicke (t21) des ersten erweiterten Abschnitts (331) des Lamellenblechs (300) die Primärdicke (t1) des Lamellenblechs (300) um mindestens 50 % überschreitet, z. B. die sekundäre erste Dicke (t21) des ersten erweiterten Abschnitts (331) des Lamellenblechs (300) die Primärdicke (t1) des Lamellenblechs (300) um 50 % bis 400 % überschreitet, und
- die sekundäre zweite Dicke (t22) des zweiten erweiterten Abschnitts (332) des Lamellenblechs (300) die Primärdicke (t1) des Lamellenblechs (300) um mindestens 50 % überschreitet, z. B. die sekundäre zweite Dicke (t22) des zweiten erweiterten Abschnitts (332) des Lamellenblechs (300) die Primärdicke (t1) des Lamellenblechs (300) um 50 % bis 400 % überschreitet.

12. Das Lamellenblech (300) nach einem der Ansprüche 9 bis 11, wobei
- eine Länge der ersten Ausbuchtung (321) 1 mm bis 5 mm beträgt und
- eine Länge der zweiten Ausbuchtung (322) 1 mm bis 5 mm beträgt.

13. Das Lamellenblech (300) nach einem der Ansprüche 9 bis 12, wobei
- ein Abstand zwischen der ersten Ausbuchtung (321) und der zweiten Ausbuchtung (322) mindestens 2 mm, beispielsweise 2 mm bis 8 mm, beträgt.

14. Das Lamellenblech (300) nach einem der Ansprüche 9 bis 13, wobei
- ein Verhältnis eines Abstands zwischen der ersten Ausbuchtung (321) und der zweiten Ausbuchtung (322) zu einer Länge der ersten Ausbuchtung (321) 1,5 bis 4 beträgt.

15. Das Lamellenblech (300) nach einem der Ansprüche 9 bis 14, wobei
- eine Oberseite (341) des ersten erweiterten Abschnitts (331) dazu ausgebildet ist, eine Oberseite (541) einer ersten Lamellenerweiterung (531) auszubilden, wobei die Oberseite (541) der ersten Lamellenerweiterung (531) in einer Tiefe von 30 % bis 60 % einer Primärtiefe (d1) der ersten Lamelle (500) angeordnet ist, und
- eine Oberseite (342) des zweiten erweiterten Abschnitts (332) dazu ausgebildet ist, eine Oberseite (542) einer zweiten Lamellenerweiterung (532) auszubilden, wobei die Oberseite (542) der zweiten Lamellenerweiterung (532) in einer Tiefe von 30 % bis 60 % einer Primärtiefe (d1) der ersten Lamelle (500) angeordnet ist.

## Revendications

1. Agencement de blocs de bande de roulement (200) adapté à un pneumatique (100) ou à une bande de roulement (150) pour un pneumatique (100), l'agencement de blocs de bande de roulement (200) comprenant :
- un bloc de bande de roulement (210) comprenant une première paroi de lamelle (511), une seconde paroi de lamelle (512) et un fond (513) délimitant une première lamelle (500), dans lequel
- la première lamelle (500) comprend une ouverture supérieure (514),
- la première paroi de lamelle (511) et la seconde paroi de lamelle (512) sont agencées parallèlement l'une à l'autre et définissent une largeur primaire (w1) de la première lamelle (500), la largeur primaire (w1) de la première lamelle (500) étant une largeur de l'ouverture supérieure (514),
- le fond (513) définit une ligne de fond (529) de la première lamelle, dans lequel une profondeur primaire (d1) de la première lamelle (500) est agencée entre l'ouverture supérieure (514) et la ligne de fond (529),
- le fond (513) de la première lamelle (500) est pourvu d'au moins un premier évidement (521) et un second évidement (522), le premier évidement (521) et le second évidement (522) pénétrant dans le bloc de bande de roulement (210) depuis la ligne de fond (529) en s'éloignant de l'ouverture supérieure (514),
- le premier évidement (521) est compris dans un premier élargissement de lamelle (531), le premier élargissement de lamelle (531) s'étendant vers l'ouverture supérieure (514) de la première lamelle (500) et ayant une première largeur secondaire (w21), telle que mesurée entre la première paroi de lamelle (511) et la seconde paroi de lamelle (512) à un emplacement situé entre la ligne de fond (529) et l'ouverture supérieure (514), la première largeur secondaire (w21) dépassant la largeur primaire (w1), et
- le second évidement (522) est compris dans un second élargissement de lamelle (532), le second élargissement de lamelle (532) s'étendant vers l'ouverture supérieure (514) de la première lamelle (500) et ayant une seconde largeur secondaire (w22), telle que mesurée entre la première paroi de lamelle (511) et la seconde paroi de lamelle (512) à un emplacement situé entre la ligne de fond (529) et l'ouverture supérieure (514), la seconde largeur secondaire (w22) dépassant la largeur primaire (w1), **caractérisé en ce que**
- l'ouverture supérieure (514) de la première lamelle (500) présente un motif en zigzag ou ondulé,
- une surface supérieure (551) du premier élargissement de lamelle (531) est inclinée de telle sorte qu'une première normale (N1) à la surface supérieure (551) du premier élargissement de lamelle (531) forme un premier angle (α1) de 20 à 70 degrés avec une première direction (Dir1) qui est orientée depuis l'ouverture supérieure (514) vers le fond (513) de la première lamelle (500), et
- une surface supérieure (552) du second élargissement de lamelle (532) est inclinée de telle sorte qu'une seconde normale (N2) à la surface supérieure (552) du second élargissement de lamelle (532) forme un second angle (α2) de 20 à 70 degrés avec la première direction (Dir1).

2. Agencement de blocs de bande de roulement (200) selon la revendication 1, dans lequel
- le premier évidement (521) pénètre dans le bloc de bande de roulement (210) depuis la ligne de fond (529) sur une première profondeur secondaire (d21) du premier évidement (521), la première profondeur secondaire (d21) étant de 0,5 mm à 2,0 mm, et
- le second évidement (522) pénètre dans le bloc de bande de roulement (210) depuis la ligne de fond (529) sur une seconde profondeur secondaire (d22) du second évidement (522), la seconde profondeur secondaire (d22) étant de 0,5 mm à 2,0 mm.

3. Agencement de blocs de bande de roulement (200) selon la revendication 1 ou 2, dans lequel
- la première largeur secondaire (w21) du premier élargissement de lamelle (531) de la première lamelle (500) dépasse d'au moins 50 % la largeur primaire (w1) de la première lamelle (500), par exemple, la première largeur secondaire (w21) du premier élargissement de lamelle (531) de la première lamelle (500) dépasse de 50 à 400 % la largeur primaire (w1) de la première lamelle (500) ; et
- la seconde largeur secondaire (w22) du second élargissement de lamelle (532) de la première lamelle (500) dépasse d'au moins 50 % la largeur primaire (w1) de la première lamelle (500), par exemple, la seconde largeur secondaire (w22) du second élargissement de lamelle (532) de la première lamelle (500) dépasse de 50 % à 400 % la largeur primaire (w1) de la première lamelle (500).

4. Agencement de blocs de bande de roulement selon l'une quelconque des revendications 1 à 3, dans lequel
- une longueur (l21) du premier évidement (521) est de 1 mm à 5 mm, et
- une longueur (l22) du second évidement (522) est de 1 mm à 5 mm.

5. Agencement de blocs de bande de roulement selon l'une quelconque des revendications 1 à 4, dans lequel
- une distance (Δ21) entre le premier évidement (521) et le second évidement (522) est d'au moins 2 mm, par exemple de 2 mm à 8 mm.

6. Agencement de blocs de bande de roulement selon l'une quelconque des revendications 1 à 5, dans lequel
- un rapport (Δ21/l21) de la distance (Δ21) entre le premier évidement (521) et le second évidement (522) à la longueur (l21) du premier évidement (521) est de 1,5 à 4.

7. Agencement de blocs de bande de roulement (200) selon l'une quelconque des revendications 1 à 6, dans lequel
- un sommet (541) du premier élargissement de lamelle (531) est agencé à une première profondeur tertiaire (d31) depuis l'ouverture supérieure (514), la première profondeur tertiaire (d31) étant de 30 % à 60 % de la profondeur primaire (d1) de la première lamelle (500), et
- un sommet (542) du second élargissement de lamelle (532) est agencé à une seconde profondeur tertiaire (d32) depuis l'ouverture supérieure (514), la seconde profondeur tertiaire (d32) étant de 30 % à 60 % de la profondeur primaire (d1) de la première lamelle (500).

8. Pneumatique (100) comportant une bande de roulement (110) comprenant l'agencement de blocs de bande de roulement (200) selon l'une quelconque des revendications 1 à 7.

9. Plaque de lamelle (300) destinée à former une première lamelle (500) dans un bloc de bande de roulement (210) d'un agencement de blocs de bande de roulement (200) adapté à un pneumatique (100) ou à une bande de roulement (150) pour un pneumatique (100), la plaque de lamelle (300) comprenant :
- une première surface (311) destinée à former une première paroi de lamelle (511) de la première lamelle (500),
- une seconde surface (312) opposée à la première surface (311), destinée à former une seconde paroi de lamelle (512) de la première lamelle (500),
- un bord inférieur (313) destiné à former un fond (513) de la première lamelle (500), et
- un bord supérieur (314) opposé au bord inférieur (313), dans laquelle
- une distance entre la première surface (311) et la seconde surface (312) définit une épaisseur primaire (t1) de la plaque de lamelle (300),
- le bord inférieur (313) est pourvu d'un premier renflement (321) et d'un second renflement (322), le premier renflement (321) et le second renflement (322) faisant saillie depuis une ligne de fond (329) définie par le bord inférieur (313), en s'éloignant du bord supérieur (314),
- le premier renflement (321) est compris dans une première section élargie (331) de la plaque de lamelle (300), la première section élargie (331) s'étendant vers le bord supérieur (314) et ayant une première épaisseur secondaire (t21), telle que mesurée à un emplacement situé entre la ligne de fond (329) et le bord supérieur (314), la première épaisseur secondaire (t21) dépassant l'épaisseur primaire (t1) de la plaque de lamelle (300), et
- le second renflement (322) est compris dans une seconde section élargie (332) de la plaque de lamelle (300), la seconde section élargie (332) s'étendant vers le bord supérieur (314) et ayant une seconde épaisseur secondaire (t22), telle que mesurée à un emplacement situé entre la ligne de fond (329) et le bord supérieur (314), la seconde épaisseur secondaire (t22) dépassant l'épaisseur primaire (t1) de la plaque de lamelle (300), **caractérisée en ce que**
- la plaque de lamelle (300) est configurée pour former une première lamelle (500) dont l'ouverture supérieure (514) présente un motif en zigzag ou ondulé,
- une surface supérieure (351) de la première section élargie (331) est inclinée de telle sorte qu'une troisième normale (N3) à la surface supérieure (351) de la première section élargie (331) forme un troisième angle (α3) avec une seconde direction (Dir2) qui est orientée depuis le bord inférieur (313) vers le bord supérieur (314), le troisième angle (α3) étant de 20 à 70 degrés, et
- une surface supérieure (352) de la seconde section élargie (332) est inclinée de telle sorte qu'une quatrième normale (N4) à la surface supérieure (352) de la seconde section élargie (332) forme un quatrième angle (α4) avec la seconde direction (Dir2), le quatrième angle (α4) étant de 20 à 70 degrés.

10. Plaque de lamelle (300) selon la revendication 9, dans laquelle
- le premier renflement (321) fait saillie depuis la ligne de fond (329) sur une première hauteur (h1) du premier renflement (321), la première hauteur (h1) du premier renflement (321) étant de 0,5 mm à 2,0 mm, et
- le second renflement (322) fait saillie depuis la ligne de fond (329) sur une seconde hauteur (h2) du second renflement (322), la seconde hauteur (h2) du second renflement (322) étant de 0,5 mm à 2,0 mm.

11. Plaque de lamelle (300) selon la revendication 9 ou 10, dans laquelle
- la première épaisseur secondaire (t21) de la première section élargie (331) de la plaque de lamelle (300) dépasse d'au moins 50 % l'épaisseur primaire (t1) de la plaque de lamelle (300), par exemple, la première épaisseur secondaire (t21) de la première section élargie (331) de la plaque de lamelle (300) dépasse de 50 % à 400 % l'épaisseur primaire (t1) de la plaque de lamelle (300), et
- la seconde épaisseur secondaire (t22) de la seconde section élargie (332) de la plaque de lamelle (300) dépasse d'au moins 50 % l'épaisseur primaire (t1) de la plaque de lamelle (300), par exemple, la seconde épaisseur secondaire (t22) de la seconde section élargie (332) de la plaque de lamelle (300) dépasse de 50 % à 400 % l'épaisseur primaire (t1) de la plaque de lamelle (300).

12. Plaque de lamelle (300) selon l'une quelconque des revendications 9 à 11, dans laquelle
- une longueur du premier renflement (321) est de 1 mm à 5 mm, et
- une longueur du second renflement (322) est de 1 mm à 5 mm.

13. Plaque de lamelle (300) selon l'une quelconque des revendications 9 à 12, dans laquelle
- une distance entre le premier renflement (321) et le second renflement (322) est d'au moins 2 mm, par exemple de 2 mm à 8 mm.

14. Plaque de lamelle (300) selon l'une quelconque des revendications 9 à 13, dans laquelle
- un rapport d'une distance entre le premier renflement (321) et le second renflement (322) à une longueur du premier renflement (321) est de 1,5 à 4.

15. Plaque de lamelle (300) selon l'une quelconque des revendications 9 à 14, dans laquelle
- un sommet (341) de la première section élargie (331) est configuré pour former un sommet (541) d'un premier élargissement de lamelle (531), dans laquelle le sommet (541) du premier élargissement de lamelle (531) est agencé à une profondeur de 30 % à 60 % d'une profondeur primaire (d1) de la première lamelle (500), et
- un sommet (342) de la seconde section élargie (332) est configuré pour former un sommet (542) d'un second élargissement de lamelle (532), dans laquelle le sommet (542) du second élargissement de lamelle (532) est agencé à une profondeur de 30 % à 60 % d'une profondeur primaire (d1) de la première lamelle (500).
